# EUROPÄISCHE PATENTSCHRIFT

(11) **EP 2 712 790 B1**
(45) Veröffentlichungstag und Bekanntmachung des Hinweises auf die Patenterteilung: **18.11.2015**
(21) Anmeldenummer: 13004424.1
(22) Anmeldetag: 11.09.2013
(51) Int. Cl.: B60R 13/02, B29L 31/30, B62D 25/06, B32B 43/00, B29C 53/06, B29L 9/00, B62D 29/00

(54) **Gewölbtes Fahrzeugdach mit Verstärkungs- und Dämpfungselement**
Curved vehicle roof with reinforcement and damping element
Toit de véhicule cintré avec élément d'amortissement et de renforcement

(30) Priorität: 26.09.2012 EP 12006718
(43) Veröffentlichungstag der Anmeldung: 02.04.2014
(73) Patentinhaber: 3A Composites GmbH, 49090 Osnabrück (DE)
(72) Erfinder: Walsch, Thomas, 49525 Lengerich (DE); Hollmann, Christoph, 78269 Volkertshausen (DE)
(74) Vertreter: Gernet, Samuel Andreas

(56) Entgegenhaltungen:
- EP-A1- 0 826 555
- EP-A1- 1 106 440
- EP-A1- 1 619 007

## Beschreibung

Die Erfindung betrifft ein gewölbtes Fahrzeugdach aus Metallblech, Kunststoff oder Verbundwerkstoff und einem fahrzeuginnenseitig auf das Fahrzeugdach aufgeklebten Dachverstärkungselement aus einer Verbundplatte bestehend aus einem Schaumstoffkern und beidseitig mit dem Kern fest verbundenen Deckschichten sowie ein Verfahren nach dem Oberbegriff von Anspruch 7.

Heute werden Dachverstärkungselemente von einer Reihe von Automobilherstellern zur Erhöhung der Dachbeulsteifigkeit und der akustischen Dämpfung eingesetzt. Neben harzgetränkten Pappprodukten kommen vorwiegend geformte Sandwichplatten bestehend aus einem PUR-Schaumkern und beschichteten Papier- oder Kunststoff-/Papierverbunddeckschichten zur Anwendung.

Eine aus der EP-B-0 825 066 bekannte Dachversteifung für Fahrzeuge besteht aus einer einseitig mit einer Deckschicht verbundenen Platte aus geschäumtem Kunststoff. Zur Herstellung dieser Dachversteifung wird zunächst eine beidseitig mit einer Deckschicht verbundene Platte aus geschäumtem Kunststoff hergestellt. Anschliessend wird die geschäumte Platte mittig in zwei einseitig mit einer Deckschicht versehene Platten gespalten und mit Übermass auf die Abmessungen der Dachhaut zugeschnitten. Eine einzelne Deckschicht wird ebenfalls mit Übermass auf die Abmessung der Dachhaut zugeschnitten und zusammen mit einer Klebstoffschicht zwischen der Schaumplatte und der einzelnen Deckschicht in einem der Wölbung und Kontur der Dachhaut entsprechenden Formwerkzeug auf die endgültige Form umgeformt und verklebt. Kurz vor Öffnung des Formwerkzeugs wird das Formteil zur passenden Dachversteifung ausgestanzt. Der geschäumte Kunststoff ist ein Polyurethanschaum, die Deckschichten bestehen aus Kraftlinern.

Auch bei dem aus der WO-A-01/26 878 bekannten Verfahren zur Herstellung einer Dachversteifung für Fahrzeuge wird zunächst eine Platte aus geschäumtem Kunststoff mit beidseitig angeordneten Deckschichten hergestellt und diese anschliessend durch mittiges Spalten in zwei einseitig mit einer Deckschicht versehene Schaumplatten geschnitten. Die Deckschichten sind mittels einer Klebeschicht mit dem Schaumkern verbunden. Die endgültige Formgebung der Platte zur Dachversteifung erfolgt hier durch direktes Verkleben der unbeschichteten Seite der Platte mit der Dachhaut.

EP-A-1 619 007 beschreibt die Herstellung eines einen gekrümmten Bereich aufweisenden Versteifungskörpers zur Erhöhung der Belastbarkeit der Dachfläche eines Fahrzeugs. Der Versteifungskörper besteht aus einer ebenen biegsamen Leichtstoffplatte aus Schaumstoff mit beidseitig fest mit der Platte verbundenen Deckschichten. Die Deckschichten werden in den zu krümmenden Bereichen gezielt lokal eingedrückt, wobei durch die dadurch eintretende Verkürzung der Deckschichten die Krümmung des Versteifungskörpers gebildet wird.

EP-A-0 826 555 beschreibt ein flächiges Auskleidungsteil als Kraftfahrzeug-Innenverkleidungsteil aus mehrlagigem Fasermaterial. Das Fasermaterial besteht bevorzugt aus Wellkarton, wobei zwischen zwei Decklagen zwei durch eine Zwischenlage getrennte Wellkartonschichten angeordnet sind. Zur Vermeidung von Rissen wegen unterschiedlicher thermischer Ausdehnung zwischen Auskleidungsteil und Trägermaterial, d.h. der Fahrzeugkarosserie weist das Auskleidungsteil wenigstens auf einer Seite Zugspannungsausgleichsschlitze auf. Um das als ebener Zuschnitt angelieferte Auskleidungsteil in die gewünschte Raumform der Karosserie zu bringen, weist das Auskleidungsteil auf seiner Krümmungsaussenseite auch Bombierungsschlitze auf. Die Festigkeit des Auskleidungsteils wird durch die Zwischenlage sichergestellt, welche weder durch die Zugspannungsausgleichsschlitze noch durch die Bombierungsschlitze geschwächt wird.

EP-A1-1 106 440 beschreibt einen vorstrukturierten Himmel enthaltend Wölbungen für ein Fahrzeugdach mit einer starren Grundstruktur und einer flexiblen Decklage. Der Himmel weist Sollknicklinien zum Umlegen oder Abknicken von Himmelabschnitten für die Montage an einem Fahrzeugdach auf.

Ein weiteres Verfahren zur Herstellung von Fahrzeugdachversteifungen besteht darin, dass ebene Versteifungsplatten als Halbzeug hergestellt werden, welche dann von Zulieferbetrieben in Formwerkzeugen zu an die Dachkrümmung und Dachgeometrie angepassten dreidimensionalen Formbauteilen verpresst werden.

Die Befestigung der Dachverstärkungselemente an der Unterseite der Fahrzeugdachblechs erfolgt üblicherweise manuell oder mit Robotern unter Verwendung von Klebstoffen.

Es hat sich gezeigt, dass eine hohe Konturgenauigkeit der einbaufertigen Dachverstärkungselemente sehr wichtig ist, da Abweichungen von der Dachgeometrie aufgrund von Rückstellkräften zu optischen Beeinträchtigungen oder Beulen im dünnen Fahrzeugdachblech führen können. Um diese hohe Konturgenauigkeit zu gewährleisten, fordert die Autoindustrie üblicherweise die Einhaltung einer Geometrietoleranz der Fahrzeugdachbleche nach Befestigung der Dachverstärkungselemente von +/- 3 mm, d.h. die Krümmung der Dachverstärkungselemente darf maximal 3 mm von derjenigen des Blechdaches abweichen. Die Einhaltung dieses Erfordernisses wird beispielsweise durch Verwendung mit an die individuelle Dachkontur angepassten Lehren überprüft.

Bei vorgefertigten, gekrümmten Dachverstärkungselementen stellen der Transport und die Lagerung der Bauteile hohe Anforderungen. Dies wird beispielsweise durch die Verwendung spezieller Transportbehälter sichergestellt.

Dachverstärkungselemente, die eine ausreichende Steifigkeit aufweisen, bedingen eine an die jeweilige individuelle Dachkontur angepasste Bauteilgeometrie, was jedoch den Einsatz von teuren Formwerkzeugen oder formgebenden Prozessschritten erfordert. Die so hergestellten Bauteile müssen dann in Transportbehälter derart verpackt werden, dass die Kontur während des Transportes erhalten bleibt und sich nicht durch zu feste oder lockere Packung der einzelnen Bauteile verändert.

Aufgabe vorliegender Erfindung ist somit die Bereitstellung eines Fahrzeugdaches mit einem fahrzeuginnenseitig aufgeklebten Dachverstärkungselement, insbesondere zur Versteifung eines Fahrzeugdaches, wobei das Dachverstärkungselement vor der Montage ohne aufwendige Transportverpackung transportierbar sein soll. Eine weitere Aufgabe besteht in der Bereitstellung eines verstärkten Fahrzeugdaches, welches ohne teure formgebende Verfahren und Werkzeuge hergestellt werden kann. Eine noch weitere Aufgabe besteht in der Bereitstellung eines Dachverstärkungselements, welches ohne Kontrolle der Krümmungsradien durch Lehrenprüfung in einem Fahrzeugdach eingesetzt werden kann.

Die Aufgabe besteht insbesondere in der Bereitstellung eines gewölbten Fahrzeugdaches aus Metallblech, Kunststoff oder Verbundwerkstoff und einem fahrzeuginnenseitig auf das Fahrzeugdach aufgeklebten Verstärkungselement, bei welchem das Verstärkungselement vorstehend genannte Aufgaben erfüllt, und insbesondere die Krümmung des Fahrzeugdachs vom aufgeklebten Dachverstärkungselement unbeeinflusst bleibt und das aufgeklebte Dachverstärkungselement keine sichtbaren lokalen Verformungen des Fahrzeugdachs bewirkt.

Aufgabe vorliegender Erfindung ist zudem die Angabe eines kostengünstigen Verfahrens zur Herstellung eines flachen, an eine vorgegebene Kontur eines Bauteils aus Metallblech, Kunststoff oder Verbundwerkstoff, insbesondere eines Fahrzeugdaches, formkongruent anpassbaren Verstärkungselements aus einem plattenförmigen Vormaterial.

Zur Lösung der auf das gewölbte Fahrzeugdach aus Metallblech, Kunststoff oder Verbundwerkstoff und einem fahrzeuginnenseitig auf das Fahrzeugdach aufgeklebten Dachverstärkungselement gerichteten Aufgabe führt ein gewölbtes Fahrzeugdach nach Anspruch 1. Bevorzugte Ausführungsformen werden in den Ansprüchen 2 bis 5 beschrieben.

Das auf das Fahrzeugdach aufgeklebte Dachverstärkungselement besteht aus einer mit einem Schnittmuster versehenen Verbundplatte aus einem Schaumstoffkern und beidseitig mit dem Kern fest verbundenen Deckschichten. Das Dachverstärkungselement ist vor dem Einbau an das Fahrzeugdach eben ausgebildet, d.h. bildet ein planes Element.

Der Schaumstoffkern besteht bevorzugt aus Polyurethan (PUR), oder enthält PUR. Ganz bevorzugt besteht der Schaumstoffkern aus einem geschlossenzelligen PUR Hart- oder Halbhartschaumstoff mit einer Raumdichte von 30 bis 55 kg/m³.

Wenigstens eine Deckschicht besteht bevorzugt aus Papier oder aus einem Kunststoff-Papier-Verbundmaterial bzw. einem Kunststoff-Papier-Laminat. Besonders bevorzugt bestehen beide Deckschichten aus Papier oder aus einem Kunststoff/Papier-Verbund.

Als Papiere werden bevorzugt Kraftliner oder Naturkraftliner mit Flächengewichten von 115 bis 300 g/m², insbesondere 125 bis 200 g/m², eingesetzt.

Eine Deckschicht aus Papier kann unbeschichtet sein, oder kann auch ein- oder beidseitig mit einem Kunststofffilm aus beispielsweise Polyethylen, Polypropylen oder Polyethylenterephthalat als Wasserdampfsperre beschichtet sein. Bei mit Polyethylen oder mit Polyethylenterephthalat beschichteten Papieren beträgt das Flächengewicht von Polyethylen bzw. Polyethylenterephthalat pro beschichtete Seite bevorzugt 10 bis 50 g/m², insbesondere 20 bis 40 g/m². Anstelle einer Beschichtung mit einem Kunststofffilm kann die Papierschicht auch mit wasserabweisenden, flammhemmenden und/oder Schimmel und Fäulnis verhindernden Stoffen imprägniert sein. Bei mit Latex-Kautschuken beschichteten Papieren beträgt das Flächengewicht je beschichteter Seite 5 bis 50 g/m², insbesondere 10 bis 30 g/m², Latex-Kautschuk. Das resultierende Flächengewicht der beschichteten Papiere, d.h. der Deckschicht, liegt bevorzugt bei 135 bis 295 g/m² und insbesondere bei 175 bis 255 g/m². Weiterhin können die Deckschichten aus Papier oder Papier/Kunststoff mit Lacken oder Klebstoffen beschichtet oder mit fungiziden Mitteln beschichtet sein.

Eine weiter bevorzugte Deckschicht besteht aus einer Kunststofffolie, insbesondere aus einer Folie oder einem Film aus Polyamid, Polyvinylchlorid, Polyethylen, Polypropylen, Polyethylenterephthalat oder HIPS (High Impact Polystyrol).

Weitere bevorzugte Deckschichten bestehen aus oder enthalten Vliesstoffe, d.h. ein textiles Flächengebilde aus verfestigten Fasern, wobei das Vlies besonders bevorzugt in Kunststoff, insbesondere Polyethylen, eingebettet ist. Als Fasermaterial werden bevorzugt Polyester-, Polypropylen-, Polyamid-, Natur-, Zellulose-, Baumwoll-, Mineral-, Basalt- und Glasfasern oder Gemische davon verwendet.

Die Verbundplatte weist bevorzugt eine Dicke von 3 mm bis 10 mm auf. Speziell bevorzugt werden Verbundplattendicken zwischen 5 mm und 8 mm.

Das Dachverstärkungselement weist ein Muster linienförmiger Schnitte auf, wobei diese Schnitte nicht die ganze Dicke der Verbundplatte durchdringen, sondern die dem Schnitt gegenüberliegende Deckschicht sowie ein daran angrenzender, zwischen dieser Deckschicht und der Schnitt-Unterkante liegender Bereich des Schaumstoffkerns vom Schnitt unberührt bleibt. Dieser vom Schnitt unberührte Bereich weist bevorzugt eine Schaumkern-Schichtdicke zwischen 1 mm und 3 mm auf.

Da der Schaumstoffkern, insbesondere im Falle eines Polyurethan-Hart- oder Halbhartschaums, eine gegenüber anderen Materialien, wie beispielsweise Wellkarton oder Fliessmaterialien, hohe Biegesteifigkeit aufweist, ist es wesentlich, dass die Schnitttiefe der linienförmigen Schnitte wenigstens 55% der Dicke des Dachverstärkungselements betragen. Bevorzugt beträgt die Schnitttiefe zwischen 60% und 85% und insbesondere zwischen 65% und 80% der Dicke des Dachverstärkungselements. Hierbei sei klargestellt, dass die Dicke des Dachverstärkungselements der Dicke der Verbundplatte entspricht, da sich das Dachverstärkungselement von der dazu verwendeten Verbundplatte strukturell nur durch das Muster der linienförmigen Schnitte unterscheidet.

Die Schnitttiefe muss nicht für alle Schnitte eines Schnittmusters exakt gleich sein. Unter Schnitttiefe wird jeweils die über alle Schnitte eines Schnittmusters gemittelte Schnitttiefe verstanden, wobei für jeden Schnitt oder Schnittabschnitt eines Schnittmusters gilt, dass die Schnitttiefe wenigstens 55% der Dicke des Dachverstärkungselements beträgt, jedoch kleiner ist als die Dicke D_{S} des Schaumstoffkerns.

Das Muster der linienförmigen Schnitte weist in der Draufsicht auf das Dachverstärkungselement eine Anzahl geschlossener oder streckenförmiger Linien auf. Unter geschlossenen Linien werden insbesondere Polygone, beispielsweise Quadrate, Sechs- oder Achtecke, Trapeze, Parallelogramme oder aber Kreise oder Ellipsen verstanden.

Unter streckenförmigen Linien werden Strecken, d.h. gerade Linien einer bestimmten Länge, aber auch Parabeln oder anderweitige kurvenförmige Gebilde, beispielsweise sinusförmige Kurven, verstanden. Bevorzugt wird insbesondere auch ein Muster einer Anzahl sich in einem Winkel schneidender Linien oder Geradenstücke.

In einer weiter bevorzugten Ausführungsform werden Muster streckenförmiger und geschlossener Linien kombiniert.

Um eine ausreichende Verformbarkeit eines Dachverstärkungselements zu erzielen, hat es sich als besonders vorteilhaft gezeigt, wenn die gesamte Länge der linienförmigen Schnitte mindestens der halben Summe der Kantenlängen des Dachverstärkungselements entspricht. Die Summe der Kantenlängen des Dachverstärkungselements entspricht dabei dem Umfang des Dachverstärkungselements. Demnach ist die gesamte in der Draufsicht auf das Dachverstärkungselement gesehene Länge der zusammen addierten linienförmigen Schnitte, d.h. die Schnittlänge, bevorzugt grösser als der halbe Umfang des Dachverstärkungselements.

Damit das Dachverstärkungselement im nicht eingebauten Zustand flach bleibt und für den Transport und den Einbau eine ausreichende Festigkeit aufweist, d.h. dass es sich nicht durch die Schwerkraft oder geringe Kräfte bei der Handhabung verformt, beträgt die Schnittlänge bevorzugt weniger als der zehnfache Umfang des Dachverstärkungselements.

Die Befestigung der Dachverstärkungselemente an der Unterseite eines Fahrzeugdachs, d.h. die fahrzeuginnenseitige Befestigung des Dachverstärkungselements am Fahrzeugdach, erfolgt manuell oder mit Robotern unter Verwendung von Klebstoffen, die in der Regel als ca. 1-2 cm dicke Kleberraupen auf das Dachverstärkungselement aufgetragen werden. Durch Anpressen und/oder Anlegen eines Vakuums zwischen Fahrzeugdach und Dachverstärkungselement wird das Dachverstärkungselement am Fahrzeugdach fixiert.

Die Kleberraupe wird bevorzugt umlaufend auf das Dachverstärkungselement aufgetragen, insbesondere umlaufend entlang dem Randbereich des Dachverstärkungselements, kann aber auch linienförmig in einer beliebigen Form aufgetragen werden. Ganz bevorzugt wird die Kleberraupe entlang den linienförmigen Schnitten auf das Dachverstärkungselement aufgetragen.

Wesentlich ist, dass das gewölbte Fahrzeugdach durch das Dachverstärkungselement nicht verformt wird. Dazu wird das Dachverstärkungselement bevorzugt mittig mit einer auf eine Stempelfläche mit einem Durchmesser von 50 mm wirkenden Kraft von weniger als 30 N in eine zur vorgegebenen Wölbung des Fahrzeugdachs formkongruentähnliche Form gebracht.

Ein Mass für den benötigten Kraftaufwand zur Umwandlung des plan hergestellten Dachverstärkungselements in eine zur Innenseite eines Fahrzeugdachs formkongruentähnliche Form ist die Biegesteifigkeit des Dachverstärkungselements. Dabei hängt die Biegesteifigkeit eines Bauteils von dessen Werkstoffzusammensetzung, dessen Abmessungen und der Form und Position ab, an der die Biegesteifigkeit bestimmt werden soll.

Da die Werkstoffe, Abmessungen und Wölbungen von Fahrzeugdächern im Wesentlichen implizit vorgegeben sind, weisen die Dachverstärkungselemente typischerweise eine Breite von 600 mm bis 1000 mm und eine Länge von 200 mm bis 2000 mm auf. Die dazu benötigte Umformfähigkeit eines Dachverstärkungselements aus einer ebenen Plattenform in eine an das Fahrzeugdach formkongruentähnliche Form wird dabei durch den benötigten Druck eines mittig auf das Dachverstärkungselement aufgesetzten Stempels mit einem Durchmesser von beispielsweise 50 mm geprüft. Es hat sich nun gezeigt, dass eine auf eine Stempelfläche mit einem Durchmesser von 50 mm mittig auf das Dachverstärkungselement ausgeübte Kraft, der für die Umformung des Dachverstärkungselements in eine an das Fahrzeugdach formkongruentähnliche Form benötigt wird, bevorzugt weniger als 30 N beträgt, um die üblichen, für Fahrzeugdächer eingesetzten Metallbleche oder Kunststoffdachteile nicht ungewollt zu verformen, bzw. um Einbeulungen durch Fixieren des Dachverstärkungselements am Fahrzeugdach aufgrund der Rückstellkraft des Dachverstärkungselements zu verhindern.

Ganz bevorzugt beträgt die mittig über eine Stempelfläche mit einem Durchmesser von 50 mm auf das Dachverstärkungselement ausgeübte Kraft, der für die Umformung des Dachverstärkungselements in eine an das Fahrzeugdach formkongruentähnliche Form benötigt wird, weniger als 25 N und insbesondere weniger als 20 N. Um dieses Erfordernis zu erfüllen, wird für das Dachverstärkungselement ein entsprechendes Muster linienförmiger Schnitte gewählt bzw. an ein vorgegebenes Fahrzeugdach angepasst.

Da das Dachverstärkungselement aus einer ebenen Verbundplatte mit einem Muster linienförmiger Schnitte gebildet wird, weist das Dachverstärkungselement eine Vielzahl flacher Teilbereiche auf, welche gegeneinander biegbar sind. Folglich kann bei den üblichen Anpressdrücken für die Umformung des Dachverstärkungselements nie eine zum Fahrzeugdach exakt formkongruente Kontur erreicht werden, weshalb in vorliegendem Text bei der an die Wölbung des Fahrzeugdachs angepassten Form des Dachverstärkungselements von Formkongruentähnlichkeit gesprochen wird.

Damit das Fahrzeugdach ausreichend versteift wird, ohne jedoch Beulen infolge des Anklebens des Dachverstärkungselements zu erhalten, soll der Abstand des Dachverstärkungselements vom Fahrzeugdach bevorzugt nirgends mehr als 3 mm betragen, d.h. die Anzahl der Schnitte, deren Schnitttiefe und das Schnittmuster muss je nach örtlich vorgegebener Krümmung des Fahrzeugdachs vorgenommen werden.

Das Dachverstärkungselement dient insbesondere auch zur Erhöhung der Dachbeulsteifigkeit. Zudem dient das Dachverstärkungselement als Dämpfungselement gegen Lärm und Vibrationen. Weiter dient das Dachverstärkungselement auch als Isolation gegen Wärme und Kälte.

Zur Lösung der auf das Verfahren gerichteten Aufgabe führt ein Verfahren mit den Merkmalen von Anspruch 6. Bevorzugte Ausführungsformen des Verfahrens sind in den abhängigen Ansprüchen 7 bis 15 beschrieben.

Als Ausgangsmaterial zur Herstellung eines an eine vorgegebenen Wölbung eines Bauteils aus Metallblech, Kunststoff oder Verbundwerkstoff in eine formkongruentähnliche Form bringbares Verstärkungselement dient eine ebene Verbundplatte bestehend aus einem Schaumstoffkern und beidseitig mit dem Schaumstoffkern fest verbundenen Deckschichten.

Die ebene Verbundplatte wird bevorzugt in einem kontinuierlichen Laminierverfahren hergestellt.

Die kontinuierliche Herstellung der Verbundplatte erfolgt zweckmässigerweise in Form von Bandmaterial in einer Doppelbandanlage, in der gleichzeitig mit dem Aufschäumen des Kunststoffs zum Bandmaterial eine feste Verbindung mit den in Bandform zugeführten Deckschichten erzeugt wird.

Der Schaumstoffkern besteht aus oder enthält zu einem wesentlichen Bestandteil bevorzugt Polyurethan (PUR). Der Schaumkern besteht bevorzugt insbesondere aus einem geschlossenzelligen PUR Hart- oder Halbhartschaumstoff mit einer Raumdichte von etwa 30 bis 55 kg/m³.

Wenigstens eine Deckschicht besteht bevorzugt aus Papier oder aus einem Kunststoff-Papier-Verbund. Ganz bevorzugt bestehen jedoch beide Deckschichten aus Papier oder aus einem Kunststoff-Papier-Verbund.

Eine Deckschicht aus Papier kann unbeschichtet sein, oder kann auch ein- oder beidseitig mit einem Kunststofffilm aus beispielsweise Polyethylen, Polypropylen oder Polyethylenterephthalat als Wasserdampfsperre beschichtet sein. Anstelle einer Beschichtung mit einem Kunststofffilm kann die Papierschicht auch mit wasserabweisenden, flammhemmenden und/oder Schimmel und Fäulnis verhindernden Stoffen imprägniert sein.

Eine weiter bevorzugte Deckschicht besteht aus einer Kunststofffolie, insbesondere aus einer Folie oder einem Film aus Polyamid, Polyvinylchlorid, Polyethylen, Polypropylen, Polyethylenterephthalat oder HIPS (High Impact Polystyrol).

Weitere bevorzugte Deckschichten bestehen aus oder enthalten Vliesstoffe, d.h. ein textiles Flächengebilde aus verfestigten Fasern, wobei das Vlies besonders bevorzugt in Kunststoff, insbesondere Polyethylen, eingebettet ist. Als Fasermaterial werden bevorzugt Polyester-, Polypropylen-, Polyamid-, Natur-, Zellulose-, Baumwoll-, Mineral-, Basalt- und Glasfasern oder Gemische davon verwendet.

Die Verbundplatte weist bevorzugt eine Dicke von 3 mm bis 10 mm auf. Ganz bevorzugt werden Verbundplatten einer Dicke von 5 bis 8 mm für die Herstellung der Verstärkungselemente verwendet.

Das Zuschneiden der Verbundplatte auf die für das Verstärkungselement notwendigen Endabmessungen geschieht durch beispielsweise Ausstanzen, Wasserstrahlschneiden, Laserschneiden, Sägen, Fräsen oder mittels Schneidmesser. Im Falle eines Ausstanzens wird bevorzugt ein Flachbettstanzwerkzeug verwendet.

Um bei der Verwendung der Verbundplatte als Verstärkungselement eine mit einer vorgegebenen Krümmung eines Bauteils aus Metallblech, Kunststoff oder Verbundwerkstoff formkongruentähnliche Anpassung der Verbundplatte zu erreichen, wird in die Verbundplatte ein Muster linienförmiger Schnitte eingebracht, bevorzugt eingestanzt.

Die Schnitttiefe der linienförmigen Schnitte beträgt wenigstens 55% der Dicke der Verbundplatte, jedoch weniger als die Dicke des Schaumstoffkerns.

Das Einbringen der linienförmigen Schnitte geschieht bevorzugt im selben Arbeitsgang wie das Formatschneiden der Verbundplatte. Bevorzugt erfolgt das Formatschneiden der Verbundplatte wie auch das Einbringen der linienförmigen Schnitte durch Stanzen, d.h. in demselben Stanzvorgang, insbesondere bevorzugt mit einem Flachbettstanzwerkzeug. Bevorzugt weist somit das Flachbettstanzwerkzeug zusätzliche Stanzmesser für das Einstanzen des Musters linienförmiger Schnitte auf. Dabei sind diese Stanzmesser zweckmässigerweise etwas weniger lang als diejenigen für das Formatschneiden der Verbundplatte.

Die Form und Länge der Messer für das Einbringen des Musters linienförmiger Schnitte in die Verbundplatte werden derart gewählt, dass wenigstens die dem Schnitt gegenüberliegende Deckschicht sowie ein daran angrenzender, zwischen dieser Deckschicht und der Schnitt-Unterkante liegender Bereich des Schaumstoffkerns vom Einbringen der Schnitte unbeeinträchtigt bleibt, d.h. der Schaumstoffkern behält in diesem Bereich die Struktur des ursprünglich eingesetzten Kernmaterials, bzw. die Struktur des Kernmaterials in diesem Bereich entspricht derjenigen vor dem Bearbeitungsvorgang. Die Messer weisen bevorzugt eine keilförmige Form mit in einem spitzen Winkel zusammenlaufenden Schnittkanten auf.

Bevorzugt weist der vom Einbringen des linienförmigen Schnittmusters unbeeinträchtigte Bereich des Kernmaterials eine Schichtdicke zwischen 1 mm und 3 mm auf.

Wesentlich ist nun, dass die Schnitttiefe der linienförmigen Schnitte wenigstens 55% der Dicke der Verbundplatte beträgt. Bevorzugt beträgt die Schnitttiefe jeweils zwischen 60% und 85% und insbesondere zwischen 65 % und 80% der Dicke der Verbundplatte.

Das Muster linienförmiger Schnitte wirdimmer nur auf einer Seite der Verbundplatte eingebracht, d.h..
nur auf der gegen das zu verstärkende Bauteil zu liegen kommenden Seite des Verstärkungselements. Dadurch sind die Rückstellkräfte der Deckschicht herabgesetzt und nach dem Ankleben des Verstärkungselements an das zu verstärkende Bauteil tritt auch kein Ablösen des Verstärkungselements oder eine Beulenbildung des Blechs oder Kunststoffs auf.

Das Muster linienförmiger Schnitte weist in der Draufsicht auf das Verstärkungselement bevorzugt eine Anzahl geschlossener, vorzugsweise polygonaler, kreis- oder ellipsenförmiger Linien, und/oder streckenförmiger Linien, vorzugsweise sich kreuzender Linien, und/oder eine Anzahl parabelförmiger oder kurvenförmiger Linien auf.

Die nach dem Schneidvorgang entnommene Verstärkungsplatte enthaltend das Muster linienförmiger Schnitte ist weiterhin flach und besitzt ausreichend Eigenstabilität, um beim Stapeln und Transport, dem Einlegen der Verstärkungselemente in einen Transportbehälter und in eine Montagestation oder dem Greifen eines Verstärkungselements mit einem Roboterarm nicht zu brechen, abzuknicken oder krumm zu werden.

Die Steifigkeit des Verstärkungselements ist einseitig, d.h. auf der gegen das zu verstärkende Bauteil gerichteten Seite, derart reduziert, dass dieses weiterhin flache Bauteil bei der Montage mit einem üblichen Anpressdruck beim manuellen Verbau oder beim Positionieren mittels Roboter die Kontur des zu verstärkenden Bauteils annimmt und sich mit dem nachfolgend beschriebenen Verfahren ankleben lässt.

Die dem zu verstärkenden Bauteil abgewandte Seite des Verstärkungselements weist nach der Montage ausreichend Steifigkeit auf, um die gewünschte Versteifungswirkung des Bauteils zu gewährleisten.

Die gegen das zu verstärkende Bauteil gerichtete Seite des Verstärkungselements kann geschwächt werden, weil die andere Seite des Verstärkungselements die auf das gewölbte Bauteil einwirkenden Kräfte aufnimmt.

Die erfindungsgemäss hergestellten Verstärkungselemente werden durch Kleben auf das zu verstärkende oder versteifende, gewölbte Bauteil aus Metallblech, Kunststoff oder Verbundwerkstoff angebracht. Dazu wird bevorzugt eine ca. 1-2 cm dicke Kleberraupe auf die zu verklebende Seite des Verstärkungselements aufgetragen. Durch Anpressen und/oder Anlegen eines Vakuums zwischen Bauteil und Verstärkungselement mit beispielsweise umlaufender Kleberraupe wird das Verstärkungselement am Bauteil fixiert.

Besonders bevorzugt werden die Kleberraupen mit den Positionen der linienförmigen Schnitte in Deckung gebracht. So dringt beim Andrücken des Verstärkungselements ans Bauteil in die gegebenenfalls leicht geweiteten Schnittspalte Kleber ein, verbindet und stabilisiert diese, wodurch sich die Kraftaufnahme erhöht. Zudem wird ein Absinken eines allenfalls angelegten Vakuums zum Anpressen des Verstärkungselements an das Bauteil während dem Klebevorgang verhindert.

Beim Verstärken eines Fahrzeugdaches sind die Kleberraupen bevorzugt über die in Fahrzeugrichtung verlaufenden Längsschnitte positioniert, um weitere Kräfte des Fahrzeugdachs aufzunehmen und auf das Dachverstärkungselement zu übertragen.

Mit dem erfindungsgemässen Verfahren kann auf die Verwendung aufwendig hergestellter Formteilwerkzeuge verzichtet werden.

Als weiteren Vorteil der flachen und an gewölbte Bauteile anpassbare Verstärkungselemente ergibt sich eine höhere Anzahl von Verstärkungselementen pro Transportbehälter, so dass in der gesamten Logistikkette die Transport- und Lagerkosten gesenkt werden können.

Die gemäss dem erfindungsgemässen Verfahren hergestellten Verstärkungselemente werden bevorzugt zur Versteifung von flächigen Beplankungen, Formkörpern und Bauteilen aller Art, wie z.B. Fahrzeugdächer, Motorhauben, Kühlschranktüren und weitere gegen Eindrücken zu verstärkende Wände aus Metallblech, Kunststoff oder Verbundwerkstoff verwendet. Allgemein können die erfindungsgemässen Verstärkungselemente mit Vorteil überall dort eingesetzt werden, wo die Aussenhaut eines Bauteils vor Einbeulungen, die durch äussere Krafteinwirkungen auftreten, geschützt werden soll. Ein bevorzugter Einsatzbereich sind Dachversteifungen für Fahrzeuge, wobei auch Dachhimmel (Headliner), gegebenenfalls mit der Dachhautverstärkung kombiniert, mit den Verstärkungselementen ausgestattet werden können.

### Beispiel:

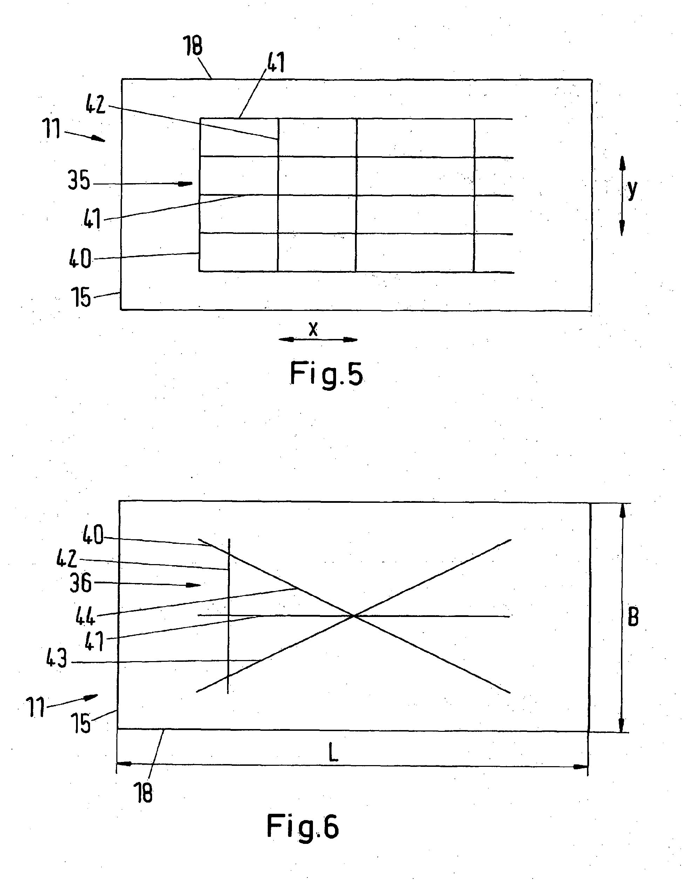

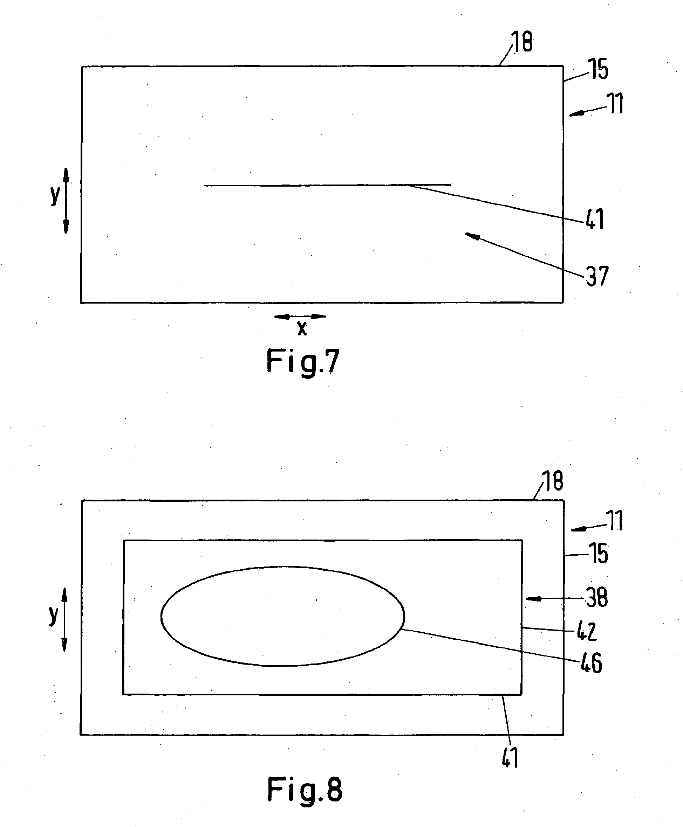

Bei einer vordefinierten Krafteinwirkung wird die Verformung von Verstärkungsplatten gemessen. Dies wird für Platten a) ohne Schnittmuster, b) mit einem mittig angeordneten, in Längsrichtung verlaufenden Schnitt einer Länge von 300 mm entsprechend dem in Fig. 7 dargestellten Schnittmuster und c) mit einem Schnittmuster aus sich im rechten Winkel schneidenden Linien durchgeführt, wobei das Schnittmuster gemäss c), welches ähnlich zu dem in Fig. 5 dargestellten Schnittmuster ausgebildet ist, jedoch am rechten Rand des Schnittmusters zusätzlich noch einen senkrecht verlaufenden Schnitt aufweist, und in Platten-Längsrichtung 9 parallel zu den senkrechten Seitenkanten des Verstärkungselements verlaufende Schnitte in einem Abstand von jeweils 100 mm und in Querrichtung der Platte 6 parallel zu den waagrecht verlaufenden Seitenkanten des Verstärkungselements verlaufende Schnitte ebenfalls in einem Abstand von jeweils 100 mm derart aufweist, dass eine umlaufende Randzone mit einer Breite in Querrichtung von 50 mm und in Längsrichtung von 56 mm gebildet wird. Eine vordefinierte Kraft wird jeweils auf einen auf das Versteifungselement mittig aufliegenden Stempel mit einem Durchmesser von 50 mm übertragen, bzw. der Kraftaufwand wird mittels einem entsprechenden Gewicht mit einem Durchmesser von 50 mm bewerkstelligt. Die mittig an den Platten gemessenen Verformungen sind in folgender Tabelle I wiedergegeben, wobei die maximal mögliche Verformung auf 28 mm an der Plattenmitte begrenzt ist.

Die Platten weisen alle dieselben Flächenabmessungen von 900 mm x 615 mm und eine Dicke von 7 mm auf. Die Platten bestehen aus einem Kern aus PUR-Hartschaumstoff mit einer Dichte von 40 kg/m³, wobei der Kern beidseitig eine Deckschicht aus Papier-Polyethylen aufweist. Die Papierlage weist 186 g/m² Kraftliner auf. Die beidseitige Polyethylenschicht der Deckschicht weist jeweils 40 g/m² PE auf. Die Schnitttiefen betragen 4 mm.

Die Verstärkungsplatten werden gegen ein Bauteil mit einer schalenförmigen Krümmung gedrückt, wobei das Bauteil eine Verschiebung der Bauteilmitte zur Ebene der vier Bauteilecken von 28 mm aufweist.

**Tabelle I:**

| Schnittmuster | Kraft | Verformung |
|---|---|---|
| | [N] | [mm] |
| a | 48 | 22 |
| b | 48 | 25 |
| b | 10 | 6 |
| c | 48 | 28 |
| c | 17 | 28 |
| c | 10 | 25 |

Aus Tabelle I folgt, dass nur die Verstärkungsplatte c) mit einem Kraftaufwand von weniger als 30 N in eine mit dem Bauteil formkongruentähnliche Form gebracht werden kann. Demnach kann nur Verstärkungsplatte c) eine Verformung von 28 mm (mittige Bauteilkrümmung) mit einem Kraftaufwand von weniger als 30 N erreichen.

Die Beulsteifigkeit an einem Fahrzeugdach mit 0.7 mm Stahlblechdicke gemessen mittig über dem Dachverstärkungselement als Verformungsweg unter einer flächigen Last von 100 N (kreisförmiger Durchmesser 70 mm) beträgt bei Raumtemperatur typischerweise 2 bis 3 mm.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen schematisch in
Fig. 1 : einen Querschnitt durch eine Verbundplatte;
Fig. 2: schematische Darstellung einer Vorrichtung zur Herstellung einer Verbundplatte aus einem Schaumstoffkern und zwei Deckschichten;
Fig. 3: einen Querschnitt durch ein Verstärkungselement;
Fig. 4: einen Querschnitt durch ein an ein gewölbtes Bauteil fixiertes Dachverstärkungselement;
Fig. 5: ein erstes Muster linienförmiger Schnitte in einem erfindungsgemässen Verstärkungselement;
Fig. 6: ein zweites Muster linienförmiger Schnitte eines erfindungsgemässen Verstärkungselements;
Fig. 7: ein drittes Muster linienförmiger Schnitte eines erfindungsgemässen Verstärkungselements;
Fig. 8: ein viertes Muster linienförmiger Schnitte eines erfindungsgemässen Verstärkungselements;
Fig. 9: einen Querschnitt durch einen schematisch dargestellten Versuchsaufbau zur Bestimmung der Verwendbarkeit vordefinierter Verstärkungselemente für die Verstärkung eines Fahrzeugdaches.

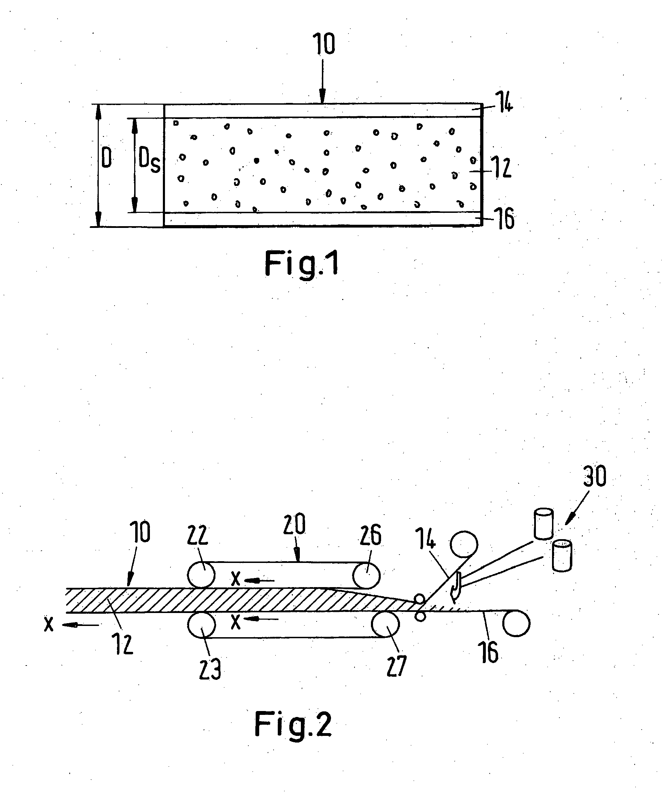

Fig. 1 zeigt eine Verbundplatte 10 bestehend aus einem Schaumstoffkern 12 und beidseits anliegenden Deckschichten 14, 16. Der Schaumstoffkern 12 besteht beispielsweise aus PUR-Hartschaum. Die Deckschichten 14 und 16 bestehen beispielsweise aus einem Papier-Kunststoffverbund. Die Gesamtdicke D der Verbundplatte 10 beträgt beispielsweise etwa 5 bis 8 mm.

Fig. 2 zeigt schematisch eine Vorrichtung zur Herstellung einer Verbundplatte 10 aus einem Schaumstoffkern 12 und zwei Deckschichten 14, 16. Dabei wird zwischen zwei von Rollen abgewickelten, kontinuierlich in x-Richtung zugeführten Deckschichtbahnen 14, 16 eine schäumbare Ausgangsmischung 30 zugeführt. In einer nachgelagerten Doppelbandanlage 20 wird die Ausgangsmischung 30 zwischen zwei Bändern in einem Bandschäumverfahren zu einem Hartschaum 12 bandgeschäumt und ausgehärtet, wobei der Hartschaumkern 12 mit den Deckschichten 14, 16 eine innige Klebeverbindung eingeht. Die Doppelbandanlage 20 weist zwei rotierende Bänder auf, welche das Ausgangsmaterial 30 nach oben und unten begrenzen, wobei sich die an das Ausgangsmaterial 30 anliegenden Bandseiten in x-Richtung bewegen. Die Bänder der Doppelbandanlage 20 werden durch je eine Antriebswalze 22, 23 angetrieben und je eine Walze 26, 27 dient als Umlenkwalze.

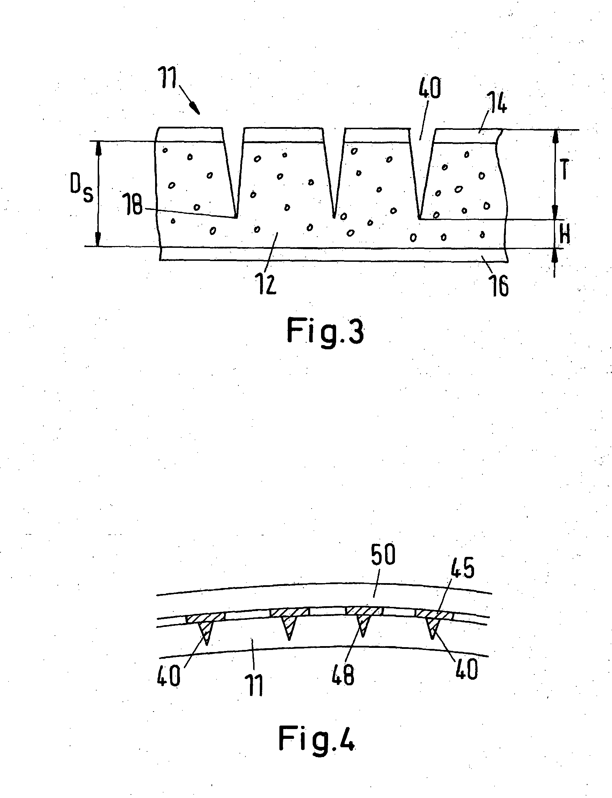

Fig. 3 zeigt einen Querschnitt durch ein Verstärkungselement 11, welches aus einer Verbundplatte 10 bestehend aus einem Schaumstoffkern 12 und beidseits anliegenden Deckschichten 14, 16 besteht und ein Muster von Schnitten 40 aufweist, wobei die Schnitte 40 die Deckschicht 14 und einen Teil des Schaumkörpers 12 durchdringen. Der Abstand zwischen der freien Oberfläche der geschnittenen Deckschicht 14 und der im Schaumstoffkern 12 liegenden Unterkanten 18 eines Schnittes 40 definiert die Schnitttiefe T. Die Schnitte 40 des Verstärkungselements 11 sind nun dergestalt ausgebildet, dass die dem Schnitt 40 gegenüberliegende Deckschicht 16 sowie ein daran angrenzender, zwischen dieser Deckschicht 16 und der Schnitt-Unterkante 18 liegender Bereich H des Schaumstoffkerns 12, der vom Schnitt 40 unbeeinflusst bleibt, d.h. die Eigenschaften des homogenen Schaumstoffkernmaterial aufweist, wenigstens 1 mm beträgt.

Fig. 4 zeigt ein an ein gewölbtes Bauteil 50 formkongruent angebrachtes Dachverstärkungselement 11 bestehend aus einem Schaumstoffkern und zwei Deckschichten. Fig. 4 zeigt auch schematisch Teile des Musters linienförmiger Schnitte 40 auf der gegen das zu verstärkende Bauteil gerichteten Seite des Verstärkungselements 11, wobei die Schnitte hier querschnittlich V-förmig ausgebildet sind. Weiter sind in Fig. 4 die durch das Fixieren des Verstärkungselements am Bauteil 50 zusammengedrückten Kleberraupen 45 dargestellt. Die Kleberraupen 45 befinden sich über den linienförmigen Schnitten 40, so dass durch das Andrücken des Verstärkungselements 11 an das Bauteil 50 während der Montage der Kleber der Kleberraupen 45 auch in die Schnitte 40 gedrückt wird, so dass die Schnitte 40 wenigstens teilweise mit Kleber 48 gefüllt sind.

Fig. 5 zeigt die Draufsicht auf ein erfindungsgemässes Verstärkungselement 11 mit einem bevorzugten ersten Muster 35 von Schnitten 40 mit sich im rechten Winkel schneidenden Streckenabschnitten 41, 42, wobei die linienförmigen Schnittstrecken 41, 42 jeweils parallel zu den Seitenkanten 15, 18 des Verstärkungselements 11 verlaufen. Der Abstand der horizontalen Schnittstrecken 41 ist in diesem Beispiel äquidistant gewählt, wobei auch der Abstand der äusseren horizontalen Schnittstrecken 41 zur horizontal liegenden Seitenkante 18 des Verstärkungselements 11 dem äquidistanten Abstand zwischen den Schnittstrecken 41 entspricht. Diese äquidistanten Abstände der horizontalen Schnittstrecken sind typisch für eine spiegelsymmetrische und gegebenenfalls gleichmässige Bauteilwölbung in Querrichtung y. Die Abstände der parallelen senkrechten Schnittstrecken 42 sind unterschiedlich, was beispielsweise eine Anpassung der Biegesteifigkeit an eine Bauteilwölbung in Längsrichtung ermöglicht, wobei das Bauteil beispielsweise in x-Richtung der linken Bildseite stärker gebogen ist als in x-Richtung der rechten Bildseite.

Das in Fig. 6 dargestellte Muster 36 von Schnitten 40 enthält eine einzige, parallel zur senkrechten Seitenkante 15 des Verstärkungselements 11 verlaufende senkrechte Schnittstrecke 42 sowie eine einzige parallel zur waagrechten Seitenkante 18 des Verstärkungselements 11 verlaufende horizontale Schnittstrecke 41. Das Schnittmuster 36 enthält zudem zwei in einem spitzen Winkel sich schneidende Geradenstücke 43, 44, welche jeweils auf den beiden Diagonalen des Verstärkungselements 11 liegen. Der Schnittpunkt der diagonal liegenden Schnitte 43, 44 und der horizontal liegenden Schnittlinie 41 schneiden sich dabei beispielhaft in der Flächenmitte des Verstärkungselements 11. Ein solches Schnittmuster ist typisch für ein Verstärkungselement 11, welches ein Bauteil mit in den Randbereichen in x-Richtung vorhandenen Wölbungen versteifen soll, wobei die linke Seite in x-Richtung eine stärkere Wölbung aufweist.

Die Schnittlänge von Muster 36 ist die Summe der Längen aller Schnitte 41, 42, 43, 44 des Musters 36, d.h. die Länge der Schnitte 41, 42, 43, 44 auf die Draufsicht auf das Verstärkungselement 11 bezogen. Bevorzugt ist nun, dass die Schnittlänge des Musters 36 linienförmiger Schnitte 40 grösser ist als die halbe Länge der addierten Kantenlängen, d.h. die Summe der Länge L und der Breite B, des Dachverstärkungselements 11.

Das in Fig. 7 gezeigte Schnittmuster 37 weist eine einzige, mittig zur vertikalen Seitenkante 15 und parallel zur horizontalen Seitenkante 18 verlaufende Schnittlinie 41 auf. Die Schnittlänge des in Fig. 7 gezeigten Schnittmusters 37 beträgt offensichtlich weniger als die halbe Länge der addierten Kantenlängen des Verstärkungselements 11, da die Schnittlänge sogar weniger als die Länge L des Verstärkungselements 11 beträgt.

Fig. 8 zeigt die Draufsicht auf ein Schnittmuster 38 eines Verstärkungselements 11 enthaltend eine geschlossene rechteckförmige Schnittlinie mit horizontalen und senkrechten Schnittlinienabschnitten 41, 42 sowie eine geschlossene ellipsenförmige Schnittlinie 46. Die Schnittlinienabschnitte 41, 42 der rechteckförmigen Schnittliniestruktur sind entlang den Seitenkanten 15, 18 des Verstärkungselements 11 äquidistant beabstandet. Der Mittelpunkt der ellipsenförmigen Schnittlinie 46 ist jedoch in x-Richtung auf die links liegende Seite des Verstärkungselements 11 verschoben, während die ellipsenförmige Schnittlinie 46 in y-Richtung mittig zur Verbundplatte des Verstärkungselements 11 angeordnet ist.

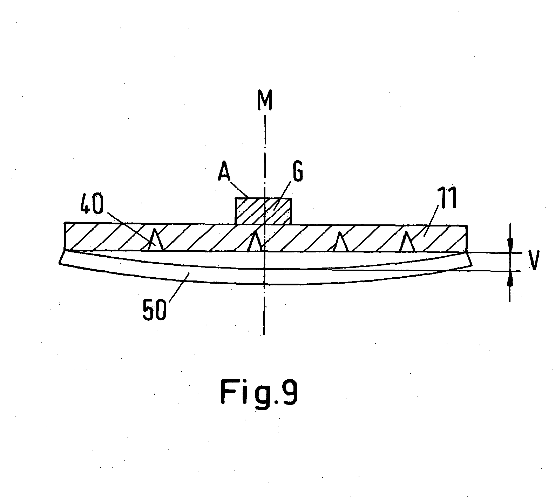

Fig. 9 zeigt einen Querschnitt durch einen schematisch dargestellten Versuchsaufbau zur Bestimmung der Verwendbarkeit von Verstärkungselementen für die Verstärkung eines Fahrzeugdaches. Der Versuchsaufbau entspricht demjenigen, wie für die Ermittlung der in Tabelle I wiedergegebenen Werte verwendet. Ein gewölbtes Bauteil 50, wie beispielsweise ein Fahrzeugdach, wird mit der Öffnung nach oben auf eine Halterungsvorrichtung (nicht gezeigt) gelegt und ein zu prüfendes Verstärkungselement 11 wird so auf die Kanten des Bauteils gelegt, dass dessen Schnitte 40 gegen das Bauteil 50 gerichtet sind. Danach wird beispielhaft ein kreiszylindrisches, vordefiniertes Gewicht G einer bestimmten Masse und einer Querschnittsfläche A mittig, d.h. gegenüber einer Mittelachse M durch das Bauteil zentriert, auf das Verstärkungselement 11 gelegt und die Verformung V, d.h. der mittige Abstand zwischen Verstärkungselement 11 und Bauteil 50 gemessen. Der durch das Gewicht G auf das Verstärkungselement 11 ausgeübte Druck entspricht somit der auf die Fläche A bezogenen Schwerkraft des Gewichts G.

## Patentansprüche

1. Gewölbtes Fahrzeugdach (50) aus Metallblech, Kunststoff oder Verbundwerkstoff und einem fahrzeuginnenseitig auf das Fahrzeugdach (50) aufgeklebten Dachverstärkungselement (11) aus einer Verbundplatte (10) der Dicke D bestehend aus einem Schaumstoffkern (12) der Dicke D_{S} und beidseitig mit dem Schaumstoffkern (12) fest verbundenen Deckschichten (14, 16), wobei das Dachverstärkungselement (11) ausschliesslich auf der dem Fahrzeugdach zugewandten Seite ein Muster (35, 36, 37, 38) linienförmiger Schnitte (40) mit einer Schnitttiefe T von wenigstens 55% der Dicke D des Dachverstärkungselements (11) aufweist, wobei die Schnitte (40) jeweils die eine Deckschicht (14) ganz durchschneiden und auch einen Teil des Schaumstoffkerns (12) schneiden,
**dadurch gekennzeichnet, dass**
das Dachverstärkungselement (11) vor dem Einbau an das Fahrzeugdach (50) eben ausgebildet ist, und , die linienförmigen Schnitte (40) eine Schnitttiefe T kleiner als die Dicke D_{S} des Schaumstoffkerns (12) aufweisen, wobei die Schnitte (40) des Dachverstärkungselements (11) dergestalt ausgebildet sind, dass die den Schnitten (40) gegenüberliegende Deckschicht (16) sowie ein daran angrenzender, zwischen dieser Deckschicht (16) und den Schnitt-Unterkanten (18) liegender Bereich H des Schaumstoffkerns (12) von wenigstens 1 mm von den Schnitten unberührt ist.

2. Gewölbtes Fahrzeugdach nach Anspruch 1, **dadurch gekennzeichnet, dass** das Muster (35, 36, 37, 38) linienförmiger Schnitte (40) derart ausgebildet ist, dass das Dachverstärkungselement (11) mittig mit einer auf eine Stempelfläche mit einem Durchmesser von 50 mm wirkenden Kraft von weniger als 30 N in eine zur vorgegebenen Wölbung des Fahrzeugdaches (50) formkongruentähnliche Form derart gebracht werden kann, dass der Abstand des Dachverstärkungselements (11) vom Metallblech (50) nirgends mehr als 3 mm beträgt.

3. Gewölbtes Fahrzeugdach nach Anspruch 1, **dadurch gekennzeichnet, dass** die Schnitttiefe (T) zwischen 60% und 85% und insbesondere zwischen 65% und 80% der Dicke D des Dachverstärkungselements beträgt.

4. Gewölbtes Fahrzeugdach nach einem der Ansprüche 1 bis 3, **dadurch gekennzeichnet, dass** die Draufsicht auf das Muster (35, 36, 37, 38) der linienförmigen Schnitte (40) eine Anzahl geschlossener, vorzugsweise polygonaler (41, 42), kreis- oder ellipsenförmiger (46) Linien, und/oder streckenförmiger Linien, vorzugsweise sich kreuzender Linien (41, 42, 43, 44), und/oder eine Anzahl parabelförmiger oder kurvenförmiger Linien aufweist.

5. Gewölbtes Fahrzeugdach nach Anspruch 1, **dadurch gekennzeichnet, dass** das Muster (35, 36, 37, 38) linienförmiger Schnitte (40) eine Schnittlänge aufweist, welche grösser ist als die halbe Länge der addierten Kantenlängen des Dachverstärkungselements (11).

6. Verfahren zur Herstellung eines für ein gewölbtes Bauteil (50) aus Metallblech, Kunststoff oder Verbundwerkstoff, insbesondere für ein gewölbtes Fahrzeugdach gemäss den Ansprüchen 1 bis 5, verwendbares, vor dem Einbau an das Bauteil (50) eben ausgebildetes Verstärkungselements (11), wobei als Ausgangsmaterial eine Verbundplatte (10) der Dicke D bestehend aus einem Schaumstoffkern (12) der Dicke D_{S} und beidseitig mit dem Schaumstoffkern (12) fest verbundenen Deckschichten (14, 16) verwendet wird, und die Verbundplatte (10) auf die erforderlichen Endabmessungen eines an die vorgegebene Wölbung des Bauteils (50) aus Metallblech, Kunststoff oder Verbundwerkstoff in eine formkongruentähnliche Form bringbaren Verstärkungselements (11) abgelängt wird,
**dadurch gekennzeichnet, dass**
die Verbundplatte (10) ausschliesslich auf der gegen das gewölbte Bauteil zu liegen kommende Seite mit einem Muster (35, 36, 37, 38) linienförmiger Schnitte (40) mit einer Schnitttiefe T von wenigstens 55% der Dicke D der Verbundplatte, jedoch kleiner als die Dicke D_{S} des Schaumstoffkerns (12) versehen wird, wobei die Schnitte (40) jeweils die eine Deckschicht (14) ganz durchschneiden und auch einen Teil des Schaumstoffkerns (12) schneiden, wobei die Schnitte (40) des Verstärkungselements (11) derart ausgebildet werden, dass die den Schnitten (40) gegenüberliegende Deckschicht (16) sowie ein daran angrenzender, zwischen dieser Deckschicht (16) und den Schnitt-Unterkanten (18) liegender Bereich einer Dicke H des Schaumstoffkerns (12) von wenigstens 1 mm vom Schneidvorgang unbeeinträchtigt bleibt.

7. Verfahren nach Anspruch 6, **dadurch gekennzeichnet, dass** das die Schnitte (40) eine Schnitttiefe (T) zwischen 60% und 85% und insbesondere zwischen 65% und 80% der Dicke D des Dachverstärkungselements aufweisen.

8. Verfahren nach Anspruch 6, **dadurch gekennzeichnet, dass** der Schaumstoffkern (12) aus geschlossenzelligem Polyurethan- (PUR) Hart- oder Halbhartschaumstoff besteht.

9. Verfahren nach Anspruch 6, **dadurch gekennzeichnet, dass** die Verbundplatte (10) eine Dicke (D) von 3 mm bis 10 mm, insbesondere von 5 bis 8 mm aufweist.

10. Verfahren nach Anspruch 6, **dadurch gekennzeichnet, dass** wenigstens eine Deckschicht (14, 16) aus Papier oder aus einem Kunststoff-Papier-Verbundmaterial besteht.

11. Verfahren nach Anspruch 6, **dadurch gekennzeichnet, dass** das Ablängen der Verbundplatte (10) auf die erforderlichen Endabmessungen des Verstärkungselements (11) und das Einbringen des Musters (35, 36, 37, 38) linienförmiger Schnitte (40) in einem einzigen Arbeitsgang durchgeführt wird.

12. Verfahren nach einem der Ansprüche 6 bis 11, **dadurch gekennzeichnet, dass** das Ablängen der Verbundplatte (10) und das Einbringen des Musters (35, 36, 37, 38) linienförmiger Schnitte (40) durch Stanzen erfolgen.

13. Verfahren nach Anspruch 12, **dadurch gekennzeichnet, dass** das Muster (35, 36, 37, 38) linienförmiger Schnitte (40) durch zusätzliche in einem Flachbettstanzwerkzeug integrierte Messer erhalten wird.

14. Verfahren nach Anspruch 6, **dadurch gekennzeichnet, dass** der vom Schneiden des linienförmigen Schnittmusters (35, 36, 37, 38) unbeeinträchtigte Bereich des Kernmaterials (12) eine Schichtdicke (H) zwischen 1 mm und 3 mm umfasst.

15. Verfahren nach Anspruch 6, **dadurch gekennzeichnet, dass** das Muster (35, 36, 37, 38) linienförmiger Schnitte (40) in der Draufsicht auf das Verstärkungselement (11) eine Anzahl geschlossener, vorzugsweise polygonaler (41, 42), kreis- oder ellipsenförmiger (46) Linien, und/oder streckenförmiger Linien (41, 42, 43, 44), vorzugsweise sich kreuzender Linien (41, 42, 43, 44), und/oder eine Anzahl parabelförmiger oder kurvenförmiger Linien aufweist.

## Claims

1. Curved vehicle roof (50) made of sheet metal, plastics material or composite material and a roof reinforcement element (11) which is bonded to the vehicle roof (50) on the inside of the vehicle and is formed by a composite panel (10) of thickness D consisting of a foam core (12) of thickness D_{S} and cover layers (14, 16) which are rigidly connected to the foam core (12) on either side thereof, the roof reinforcement element (11) comprising, solely on the side facing the vehicle roof, a pattern (35, 36, 37, 38) of linear cuts (40) having a cut depth T of at least 55 % of the thickness D of the roof reinforcement element (11), the cuts (40) in each case cutting right through one cover layer (14) and also cutting some of the foam core (12),
**characterised in that**
the roof reinforcement element (11) is formed so as to be flat prior to being fitted to the vehicle roof (50) and the linear cuts (40) have a cut depth T which is smaller than the thickness D_{S} of the foam core (12), the cuts (40) of the roof reinforcement element (11) being formed in such a way that the cover layer (16) opposite the cuts (40) and a region H of the foam core (12), measuring at least 1 mm, adjacent to said cover layer and located between said cover layer (16) and the bottom edges (18) of the cuts is not touched by the cuts.

2. Curved vehicle roof according to claim 1, **characterised in that** the pattern (35, 36, 37, 38) of linear cuts (40) is formed in such a way that the roof reinforcement element (11) can be shaped in the centre so as to be congruent with the predetermined curvature of the vehicle roof (50), by means of a force of less than 30 N acting on a stamping surface having a diameter of 50 mm, in such a way that the spacing between the roof reinforcement element (11) and the metal sheet (50) is at no point more than 3 mm.

3. Curved vehicle roof according to claim 1, **characterised in that** the cut depth (T) is between 60 % and 85 % and in particular between 65 % and 80 % of the thickness D of the roof reinforcement element.

4. Curved vehicle roof according to any of claims 1 to 3, **characterised in that** the plan view of the pattern (35, 36, 37, 38) of linear cuts (40) comprises a number of closed, preferably polygonal (41, 42), circular or elliptical (46) lines and/or elongate lines, preferably criss-cross lines (41, 42, 43, 44), and/or a number of parabolic or curved lines.

5. Curved vehicle roof according to claim 1, **characterised in that** the pattern (35, 36, 37, 38) of linear cuts (40) has a cut length which is greater than half the length of the sum of the edge lengths of the roof reinforcement element (11).

6. Method for producing a reinforcement element (11) which can be used for a curved component (50) made of sheet metal, plastics material or composite material, in particular for a curved vehicle roof according to claims 1 to 5, and which is formed so as to be flat prior to being fitted to the component (50), a composite panel (10) of thickness D consisting of a foam core (12) of thickness D_{S} and cover layers (14, 16) which are rigidly connected to the foam core (12) on either side thereof being used as the starting material, and the composite panel (10) being cut down to the required final measurements of a reinforcement element (11) which can be shaped so as to be congruent with the predetermined curvature of the sheet metal, plastics material or composite material component (50),
**characterised in that**
the composite panel (10) is provided, solely on the side resting on the curved component, with a pattern (35, 36, 37, 38) of linear cuts (40) having a cut depth T of at least 55 % of the thickness D of the composite panel but of less than the thickness D_{S} of the foam core (12), the cuts (40) in each case cutting right through one cover layer (14) and also cutting some of the foam core (12), the cuts (40) in the reinforcement element (11) being formed in such a way that the cover layer (16) opposite the cuts (40) and a region of the foam core (12), measuring at least 1 mm and having a thickness H, adjacent to said cover layer and located between said cover layer (16) and the bottom edges (18) of the cuts remains unaffected by the cutting process.

7. Method according to claim 6, **characterised in that** the cuts (40) have a cut depth (T) of between 60 % and 85 % and in particular of between 65 % and 80 % of the thickness D of the roof reinforcement element.

8. Method according to claim 6, **characterised in that** the foam core (12) consists of closed-cell polyurethane (PUR) rigid or semi-rigid foam.

9. Method according to claim 6, **characterised in that** the composite panel (10) has a thickness (D) of from 3 mm to 10 mm, in particular of from 5 to 8 mm.

10. Method according to claim 6, **characterised in that** at least one cover layer (14, 16) consists of paper or of a plastics material-paper composite material.

11. Method according to claim 6, **characterised in that** the composite panel (10) is cut down to the required final measurements of the reinforcement element (11) and the pattern (35, 36, 37, 38) of linear cuts (40) is applied in a single processing step.

12. Method according to any of claims 6 to 11, **characterised in that** the composite panel (10) is cut down and the pattern (35, 36, 37, 38) of linear cuts (40) is applied by means of stamping.

13. Method according to claim 12, **characterised in that** the pattern (35, 36, 37, 38) of linear cuts (40) is achieved by means of additional blades integrated into a flatbed stamping tool.

14. Method according to claim 6, **characterised in that** the region of the core material (12) unaffected by the cutting of the linear cut pattern (35, 36, 37, 38) has a layer thickness (H) of between 1 mm and 3 mm.

15. Method according to claim 6, **characterised in that**, in plan view of the reinforcement element (11), the pattern (35, 36, 37, 38) of linear cuts (40) comprises a number of closed, preferably polygonal (41, 42), circular or elliptical (46) lines and/or elongate lines (41, 42, 43, 44), preferably criss-cross lines (41, 42, 43, 44), and/or a number of parabolic or curved lines.

## Revendications

1. Toit de véhicule voûté (50) constitué de tôle métallique, de matière plastique ou de matériau composite et d'un élément de renforcement de toit (11) collé sur un côté interne au véhicule sur le toit de véhicule (50) constitué d'une plaque composite (10) de l'épaisseur D consistant en un noyau de mousse (12) de l'épaisseur D_{S} et de couches de couverture (14, 16) fermement liées sur les deux côtés au noyau de mousse (12), l'élément de renforcement de toit (11) présentant exclusivement sur le côté adjacent au toit de véhicule un modèle (35, 36, 37, 38) d'entailles en forme de lignes (40) avec une profondeur d'entaille T d'au moins 55 % de l'épaisseur D de l'élément de renforcement de toit (11), les entailles (40) fendant à chaque fois entièrement la couche de couverture (14) et coupant également une partie du noyau de mousse (12),
**caractérisé en ce que**
l'élément de renforcement de toit (11) est formé de manière plane avant le montage sur le toit de véhicule (50), et, les entailles en forme de lignes (40) présentent une profondeur d'entaille T inférieure à l'épaisseur D_{S} du noyau de mousse (12), les entailles (40) de l'élément de renforcement de toit (11) étant formées de sorte que la couche de couverture (16) opposée aux entailles (40) ainsi qu'un domaine H limitrophe à celle-ci, se trouvant entre cette couche de couverture (16) et les bords inférieurs d'entailles (18) du noyau de mousse (12) ne sont pas touchés par les entailles sur au moins 1 mm.

2. Toit de véhicule voûté selon la revendication 1, **caractérisé en ce que** le modèle (35, 36, 37, 38) d'entailles en forme de lignes (40) est formé de sorte que l'élément de renforcement de toit (11) peut être appliqué centralement avec une force d'action sur une surface d'empreinte d'un diamètre de 50 mm inférieure à 30 N dans une forme congruente par la forme à la voûte prédéterminée du toit de véhicule (50) de sorte que la distance de l'élément de renforcement de toit (11) de la tôle métallique (50) n'est nulle part supérieure à 3 mm.

3. Toit de véhicule voûté selon la revendication 1, **caractérisé en ce que** la profondeur d'entaille (T) est comprise entre 60 % et 85 % et est en particulier comprise entre 65 % et 80 % de l'épaisseur D de l'élément de renforcement de toit.

4. Toit de véhicule voûté selon l'une quelconque des revendications 1 à 3, **caractérisé en ce que** la vue de dessus sur le modèle (35, 36, 37, 38) des entailles en forme de lignes (40) présente un nombre de lignes fermées, de préférence polygonales (41, 42) circulaires ou d'ellipses (46), et/ou de lignes de forme aplanie, de préférence de lignes qui se croisent (41, 42, 43, 44) et/ou un nombre de lignes de forme parabolique ou de forme courbée.

5. Toit de véhicule voûté selon la revendication 1, **caractérisé en ce que** le modèle (35, 36, 37, 38) d'entailles en forme de lignes (40) présente une longueur d'entaille qui est supérieure à la demie longueur des longueurs d'arêtes additionnées de l'élément de renforcement de toit (11).

6. Procédé pour la préparation d'un élément de renforcement (11) formé de manière plane pour une pièce de construction voûtée (50) constituée d'une tôle métallique, d'une matière plastique ou d'un matériau composite, en particulier pour un toit de véhicule voûté selon les revendications 1 à 5, utilisable avant le montage sur la pièce de construction (50), une plaque composite (10) de l'épaisseur D constituée d'un noyau de mousse (12) de l'épaisseur D_{S} et de couches de couverture fermement liées sur les deux côtés au noyau de mousse (12) étant utilisée comme matière première, et la plaque composite (10) étant coupée aux mesures finales nécessaires d'un élément de renforcement (11) applicable sur la voûte prédéterminée de la pièce de construction (50) constituée d'une tôle métallique, d'une matière plastique ou d'un matériau composite dans une forme congruente par la forme,
**caractérisé en ce que**
la plaque composite (10) est munie exclusivement sur le côté venant contre la pièce de construction voûtée d'un modèle (35, 36, 37, 38) d'entailles en forme de lignes (40) avec une profondeur d'entaille T d'au moins 55 % de l'épaisseur D de la plaque composite, toutefois inférieure à l'épaisseur D_{S} du noyau de mousse (12), les entailles (40) fendant à chaque fois entièrement la couche de couverture (14) et coupant également une partie du noyau de mousse (12), les entailles (40) de l'élément de renforcement (11) étant formées de sorte que la couche de couverture (16) opposée aux entailles (40) ainsi qu'un domaine limitrophe à celle-ci, se trouvant entre cette couche de couverture (16) et les bords inférieurs d'entailles (18) d'une épaisseur H du noyau de mousse (12) reste non endommagée par le processus de coupe sur au moins 1 mm.

7. Procédé selon la revendication 6, **caractérisé en ce que** les entailles (40) présentent une profondeur de coupe (T) comprise entre 60 % et 85 % et en particulier entre 65 % et 80 % de l'épaisseur D de l'élément de renforcement de toit.

8. Procédé selon la revendication 6, **caractérisé en ce que** le noyau de mousse (12) est constitué de mousse dure ou semi-dure de polyuréthane (PUR) à alvéoles fermées.

9. Procédé selon la revendication 6, **caractérisé en ce que** la plaque composite (10) présente une épaisseur (D) de 3 mm à 10 mm, en particulier de 5 à 8 mm.

10. Procédé selon la revendication 6, **caractérisé en ce qu'**au moins une couche de couverture (14, 16) est constituée de papier ou d'un matériau composite de matière plastique-papier.

11. Procédé selon la revendication 6, **caractérisé en ce que** la mise à longueur de la plaque composite (10) aux mesures finales nécessaires de l'élément de renforcement (11) et l'introduction du modèle (35, 36, 37, 38) d'entailles en forme de lignes (40) sont réalisées dans un seul processus de travail.

12. Procédé selon l'une quelconque des revendications 6 à 11, **caractérisé en ce que** la mise à longueur de la plaque composite (10) et l'introduction du modèle (35, 36, 37, 38) d'entailles en forme de lignes (40) sont réalisées par découpe.

13. Procédé selon la revendication 12, **caractérisé en ce que** le modèle (35, 36, 37, 38) d'entailles en forme de lignes (40) est obtenu par des couteaux supplémentaires intégrés dans un outil de découpe à banc plat.

14. Procédé selon la revendication 6, **caractérisé en ce que** le domaine du matériau de noyau (12) non endommagé par la découpe du modèle d'entailles (35, 36, 37, 38) en forme de lignes comprend une épaisseur de couche (H) entre 1 mm et 3 mm.

15. Procédé selon la revendication 6, **caractérisé en ce que** le modèle (35, 36, 37, 38) d'entailles en forme de lignes (40) présente dans la vue de dessus sur l'élément de renforcement (11) un nombre de lignes fermées, de préférence polygonales (41, 42) circulaires ou d'ellipses (46) et/ou de lignes de forme aplanie (41, 42, 43, 44), de préférence de lignes qui se croisent (41, 42, 43, 44), et/ou un nombre de lignes de forme parabolique ou de forme courbée.
